# EUROPEAN PATENT SPECIFICATION

(11) **EP 0 959 722 B1**
(45) Date of publication and mention of the grant of the patent: **06.11.2002**
(21) Application number: 97900481.9
(22) Date of filing: 08.01.1997
(51) Int. Cl.: A47B 47/04, F16B 12/46

(54) **MODULAR FURNITURE SYSTEM**
Modulares Möbelsystem
SYSTEME MODULAIRE DE MEUBLES

(30) Priority: 10.01.1996 NL 1002054
(43) Date of publication of application: 01.12.1999
(73) Proprietor: G.J. Heinen Holding B.V., 7051 DG Varsseveld (NL)
(72) Inventor: HEINEN, Gerrit, Johan, NL-7051 DG Varsseveld (NL); HEINEN, Marc, Antoon, Johan, NL-7051 CK Varsseveld (NL)
(74) Representative: Ferguson, Alexander
(86) International application number: NL9700006
(87) International publication number: WO97024952

(56) References cited:
- EP-A- 0 644 338
- DE-A- 3 628 204
- FR-A- 2 094 487
- FR-A- 2 329 231

## Description

The invention relates to a modular furniture system, which is built up mainly of panels which may or may not be of different sizes, the panels being provided with holes into which fastening means can engage to connect the panels to each other, all in conformity with the wishes of the user. The furniture thus formed can be cupboards, with or without doors, such as clothes cupboards and bookcases, but possibly even seating furniture.

Such systems are available in many different designs. The panels are provided with holes according to a fixed pattern, so that the user or the installer has the freedom to choose the location of connection between the component panels of the piece of furniture to be made. '

A first example is shown in US patent specification 3,389,666, from which a modular furniture system is known, of which the panels are provided in a number of their end edges with a series of holes, and moreover with series of holes along the edges, the holes being situated at a distance from the edge of half a thickness of the panel in question, the holes being situated within a series at a distance from each other which corresponds to the panel thickness or a multiplication thereof. The panels are connected to each other by means of pins and studs.

Another modular furniture system is known from NL-A-76.10960. The furniture system disclosed in this document comprises panels, which are also provided with series of holes along the edges, the holes being situated at a distance from each other which is equal to the thickness of the panel in question, the last holes of each series being situated at a distance from the connecting edges which also corresponds to the thickness of the panel. The furniture system according to NL-A-76.10960 is commercially available under the name ip20 (registered trademark). This furniture system comprises angular fastening hooks, which hooks comprise two legs that are mutually perpendicular, the legs having an unequal length in one design and equal length in another design.

In the design with legs of equal length, both legs comprise a series of screw holes, situated in the centre, which holes are situated at distances of ½d, d, 1½d and 2d from the outer edge of the corner of the hook in question and two so-called inserting or hanging holes on the longitudinal edges, which holes are situated at distances of d and 2d from the outer edge of the corner. The hanging holes are commonly used together with screws that have been placed beforehand in the panels in question that have to be fastened. As a consequence, assembling two panels can be effected by means of a translation movement. The hanging holes can, however, also be used as screw holes per opposedly opening pair. The screw holes are used when the fastening must take place after the panels have been joined in the desired position.

The hook with legs of unequal length is provided in the short leg with screw holes at distances of ½d and d, and with hanging holes at a distance of ³/₄d from the outer edge. In the long leg, screw holes are situated at distances of d, 1½d and 2d and hanging holes at distances of ½d and 2d from the outer edge, d being 20 mm.

A system as described in the preamble of claim 1 is known from EP-A-0,644,338. The panels in this system are provided with series of holes, situated at a distance of 1³/₄d from the longitudinal edge of the panel, the holes being situated at a centre-to-centre distance of d and the end holes of each series being situated at a distance of ½d from the nearest transverse edge of the panel which is perpendicular to the line of the series. The widths of the panels is given with the equation B = n.3d - ½d, in which n is an arbitrary integral. An angular connecting hook is part of the system as described, having two legs that are positioned mutually perpendicular, both legs being provided with series of screw holes, situated in the middle, said screw holes being situated at distances of ½d, d, 1½d and 2d from the outer edge of the corner. One leg is furthermore provided on both longitudinal edges with hanging holes, situated at distances of ³/₄d and 1½d from the said outer edge of the corner. The other leg is provided on both longitudinal edges with hanging holes at distances of ³/₄, 1¼d and 1³/₄d from the outer edge of the corner. The furniture system described in EP-A-0,644,338 constitutes an improvement over the system according to, in particular, NL-A-76.10960 due to the increased possibilities of application. Nevertheless, there is a demand for an even greater versatility of the furniture system, in particular with regard to the possibility of accommodating shelves and improving the (possibilities of) connections between the panels.

It is now an object of the invention to provide such a modular furniture system, for which purpose a furniture system according to claim 1 is provided.

Determining the width of the panels as it is done according to the invention results in the subsequent steps differing 1½d in width. This means that, when a panel must be connected in a horizontal position to a panel in a vertical position, for instance a shelf to a side wall panel in a cupboard with shelves, and if the shelf is chosen one width measure smaller than that of the side wall panel with the position of the rear edges of shelf and side wall panel being the same, the front edge of the side wall panel projects 1½ . d from the front edge of the shelf. The series of holes in the side wall panel is, however, situated at a distance of 2d from the front edge of the side wall panel. A supporting means, in particular a connecting element can therefore be secured on one of the series of holes in the side wall panel, so that the shelf can not only be supported at the back but also at the front, without the necessity of using special, additional means.

The chosen relation for the width can also be advantageous from other perspectives. This is for instance the case if the series of holes in the panels end at ½d from the short or width side of the panel in question and wherein the connecting elements comprise parts for supporting the lower side of a horizontally arranged panel on panels that are arranged upright at a height of n₂ . d from the lower short side, wherein n₂ ∈ N. In this case, the width of the panel within the given relation can be chosen such, that in a piece of furniture the space below the bottom panel, which serves for instance as a shelf, and the floor can at least be almost entirely closed off by means of a skirting board placed between the floor and the lower surface of the lower panel, the width (then the height) of the skirting board satisfying the said width relation. As a result of the closing off of the space behind the skirting board which is thus obtained, this space is prevented from becoming a gathering-place for dust and other undesirable matter. It moreover improves the aspect of the lower area of the piece of furniture in question.

Another advantage of the given relation according to the invention is obtained in a modular furniture system, assembled to be a cupboard, comprising a rear panel, at least two side wall panels and a front wall made up of two panels, which two front wall panels are placed against the front end edges of the side wall panels and wherein the rear panel is placed between faces defined by the inner surfaces of the side wall panels, the front wall panels with their outer end edges facing away from each other being situated in a plane, which plane divides the side wall panel in question in half and is perpendicular to the front end edge of the side wall panel in question. When, for the rear panel, n is an odd number and when for both front wall panels for n half of (n-1) of the rear panel is chosen, then the total width of the front wall panels will be 2½d - 1½d more than that of the rear panel, resulting in a difference of 1d, which can be settled on both side edges of the front wall panels, so that the outer end edges of the front wall panels can end up in the centre of the front end edges of the side wall panels. An advantage of this is that a central covering is obtained as yet of the front end edges of the side wall panels, while both front wall panels can connect almost exactly onto each other. This is particularly advantageous in the case of a cupboard, wherein the doors can then provide an almost perfect closure of the inner space of the cupboard, in particular against dust. The central location of the outer end edges of both front wall panels is moreover advantageous with an eye to further lateral connections of extensions of the cupboard in question. One could think in particular of a double cupboard, with a central panel, which serves as side wall panel for both cupboard spaces located on either side. The neighbouring front wall panels of both cupboards can then connect onto each other with their neighbouring end edges.

The furniture system according to the invention is, to increase the number of mutual connecting options of the panels, provided with connecting elements, which are formed as angular hooks, with a flat first leg and a flat second leg perpendicular thereto, wherein both legs are provided with screw holes arranged in a series situated in the middle of the leg in question, which series is perpendicular to the meeting line of both legs, and wherein both legs are further provided with hanging holes, which are arranged in series situated on the edges of the legs in question, which series extend parallel to the series of screw holes, wherein the hanging holes are accessible from the side for receiving a screw already placed on a panel, and wherein the hanging holes in the first leg are situated at a distance of n₃ . ½d from the outer edge of the corner and the hanging holes in the second leg are situated at a distance of ³/₄d + n₄ . ½d from the outer edge of the corner, wherein n₃ and n₄ ∈ N₀.

The screw holes in both legs are preferably situated at n₅ . ½d from the outer edge of the corner, wherein n₅ ∈ N. Herein, it may be that n₃ = 1, 2, 3, 4 and n₅ = 1, 2, 3, 4. Preferably, moreover, n₄ = 1, 2, 3 and n₅ = 1, 2, 3, 4.

The invention is also directed to a furniture panel as specified in independent claim 8.

Further advantages and particulars of the furniture system according to the invention will appear from the following description of a number of exemplary embodiments of the furniture system according to the invention. The following is shown in:
figure 1: a perspective view of a furniture panel according to the invention,
figures 2A and 2B: views of respective legs of an example of the connecting hook according to the invention;
figure 3: an example of a number of possible connections between panels in the furniture system according to the invention, in vertical cross-section;
figure 4: a number of possible connections in the furniture system according to the invention, in horizontal cross-section;
figures 5 and 5A: a number of horizontal, cut-away views in a cupboard made with the furniture system according to the invention, wherein figure 5A shows an alternative skirting board solution;
figures 6 and 6A; alternative solutions to the lower portion of the furniture system according to the invention shown in figures 5 and 5A; and
figure 7: a schematic top view of a cupboard made with the furniture system according to the invention.

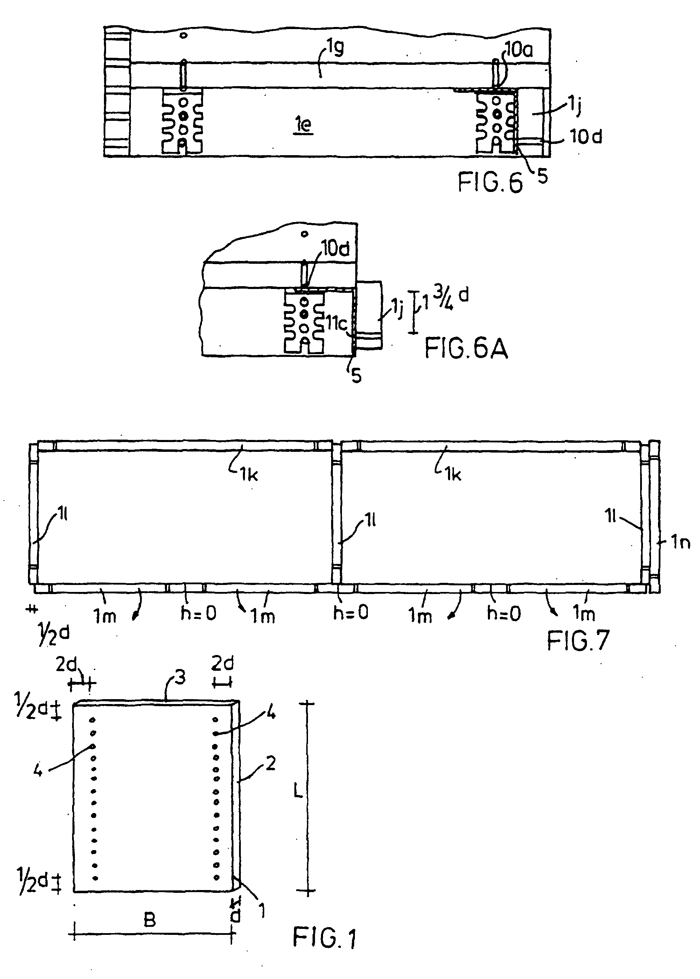

The furniture panel 1 according to the invention shown in figure 1 has a width B and a length or height L. The width and height can vary to offer the installer or user greater choice when assembling a piece of furniture.

The panel 1 has two longitudinal edges 2 and two cross edges 3 and is provided with fastening holes 4, which are arranged in two series and extend right through the thickness of d of the panel 1 to be accessible from both sides. Both series of holes 4 are situated at a distance of twice the thickness d of the adjacent longitudinal edges 2 and end at a distance of half a thickness d from the cross edges 3.

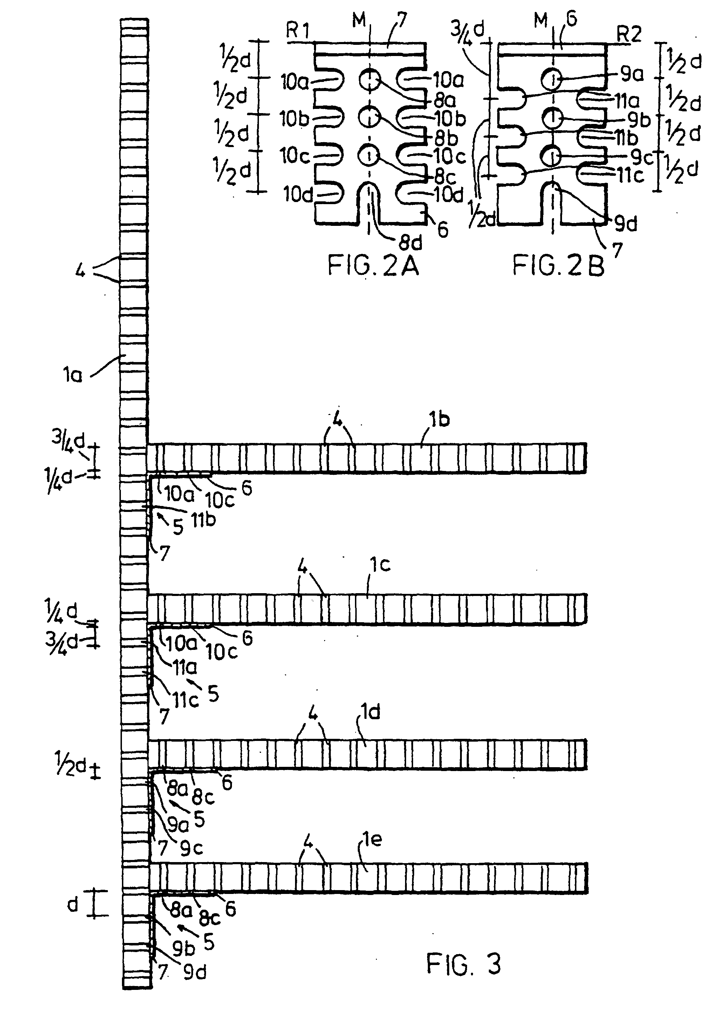

Figures 2A and 2B show the connecting hook 5 according to the invention, wherein in figure 2A the first leg 6 and in figure 2B the second leg 7 is shown, the legs 6 and 7 being arranged perpendicular to each other. The first leg 6 is provided with a number of screw holes 8a, 8b, 8c and 8d, arranged according to centre line M and with their centres at distances of ½d, d, 1½d and 2d, respectively from the line R1, representing the outer edge of the corner of the hook 5 and lying in one plane with the bearing surface of the second leg 7. The first leg 6 is furthermore provided on both edges with hanging holes 10a, 10b, 10ca and 10d accessible from aside, which are situated with their centre at a distance of ½d, d, 1½d and 2d, respectively, from the afore-mentioned line R1. In the first leg 6, therefore, the screw holes and hanging holes are always at a similar system distance from the line R1.

The second leg is also provided with a series of screw holes with reference numerals 9a, 9b, 9c and 9d, which are located at distances of ½d, d, 1½d and 2d, respectively, from the line R2, which represents the outer edge of the corner of the hook 5, related to the second leg 7, and coincides with the bearing surface of the first leg 6. Contrary to the first leg 6, the second leg 7 is provided on both edges with hanging holes which are situated at distances of ³/₄d, 1¼d and 1³/₄d, respectively, from the line R2. In both legs, the hanging holes are situated at a mutual distance of d, measured in the directions R₁, R₂.

The screw holes 8a-8d in the first leg 6 and the screw holes 9a-9d in the second leg thus offer various assembling options with steps of ½d. The hanging holes 10a-d in the first leg 6 and the hanging holes 11a-11c in the second leg 7 furthermore offer many different assembling options, due to the combination of various ¼ sizes in the second leg 7 with various half d-sizes in the first leg 6.

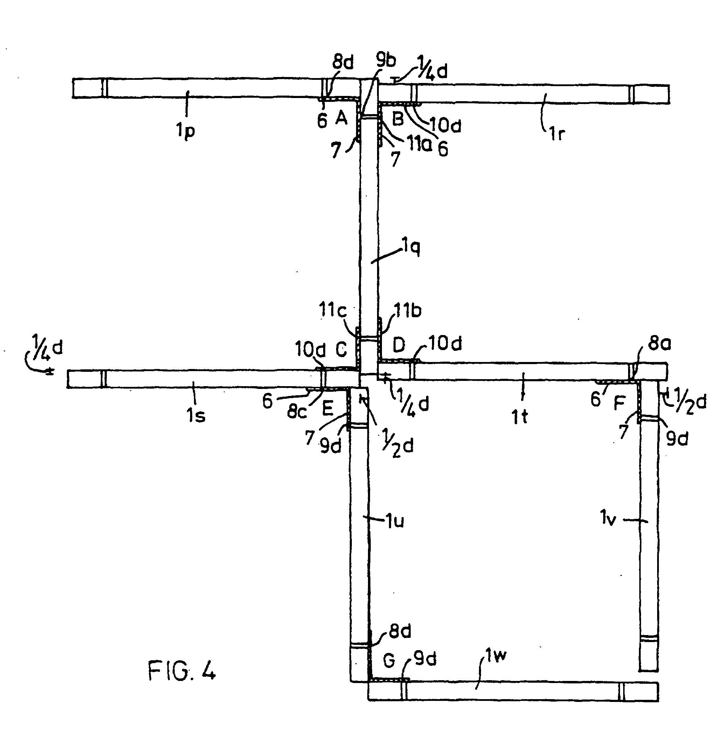

Figures 3 and 4 show some of the assembling possibilities feasible with the furniture system according to the invention.

Figure 3 herein shows a vertically arranged panel 1a, provided with a series of holes 4. These holes are situated at a centre-to-centre distance of d from each other. By way of illustration, four panels 1b, 1e, 1d and 1e have been shown at various heights, the panels being arranged horizontally and each being attached to the vertical panel 1a by means of connecting hooks 5.

The panel 1b is situated with its lower surface at ¼d above the nearest hole 4 in panel 1a. The hook 5 is placed with the first leg 6 against the lower surface of panel 1b and with the second leg 7 against the panel 1a. The first leg 6 is fastened to the panel 1b by means of screws in the hanging or inserting holes 10a and 10c and the second leg 7 is fastened to the panel 1a by means of screws in hanging or inserting holes 11b Herein each time use has been made of the hanging holes on one side of the hook.

The panel 1c is situated with its surface at a distance of ³/₄d from the nearest lower hole 4 in panel 1a. The first leg 6 is fastened to panel 1c by means of screws in holes 10a and 10c and the second leg 7 is fastened to panel 1a by means of screws in hanging holes 11a and 11c. Here, too, the hanging holes on one edge of the hook can be used.

The panel 1d is situated with its lower surface at a distance of ½d from the nearest hole 4 in panel 1a. The first leg 6 of the hook 5 is now fastened to panel 1d by means of screws through holes 8a and 8c and the second leg 7 fastened to panel 1a by means of screws in holes 9a and 9c.

Finally, panel 1e is situated with its lower surface at distance d from the next hole 4 located below it in panel 1a and is fastened with the first leg 6 to panel 1e by means of screws in holes 8a and 8c and fastened with the second leg 7 to panel 1a by means of screws through holes 9b and 9d.

The panels 1b-e can thus be horizontally supported on a vertical panel in a stable manner and on four different sizes, namely ¼d, ½d, ³/₄d and d with respect to the holes in the vertical panel.

When making horizontal corner connections, the hook of figures 2A and 2B also offers many possibilities. By way of illustration, seven different corner connections between panels 1 have been shown here, which panels each have a thickness d and are provided at a distance of 2d from their (vertical) longitudinal edges with a series of holes 4, all as discussed in connection with figure 1. In connection A, the panel 1p bears with the entire longitudinal edge against the lateral face of panel 1q. The panels 1p and 1q are connected to each other by means of a screw which is led through screw hole 8d in the first leg 6 of the hook 5, and by means of a screw which is led through screw hole 9b in the second leg 7. In the connection B, the panel 1r is situated at a distance of ¼d from the longitudinal edge 2 of the panel 1q. The first leg 6 of the hook 5 is fastened to panel 1r by means of a screw through one or both hanging holes 10d and the second leg 7 is fastened to panel 1q by means of a screw through one or both hanging holes 11a.

In connection C, the panel 1s is situated with the outer surface at a distance of ³/₄d from the longitudinal edge 2 of panel 1q. Here, the first leg 6 of the hook 5 is fastened to panel 1s by means of one or both hanging holes 10b and the second leg 7 is fastened to panel 1q by means of a screw through one or both hanging holes 11c. In connection D, the panel 1t is situated with the outer surface at a distance of ¼d outside the longitudinal edge 2 of panel 1q. The hook 5 is here fastened with first leg 6 to panel 1t by means of a screw through one or both hanging holes 10d and with the second leg 7 to panel 1q by means of a screw through one or both hanging holes 11b.

At the location of the connection E, the panel 1u is situated with its outer surface at ½d outside the longitudinal edge 2 of panel 1s. The hook 5 is here connected with the first leg 6 to the panel 1s by means of a screw through screw hole 8c and connected with its second leg 7 to panel 1u by means of a screw through screw hole 9d. At the location of connection F, the panel 1v is situated with its outer surface at ½d below the longitudinal edge 2 of the panel 1t. The hook 5 is here connected with the first leg 6 to panel 1t by means of a screw through screw hole 8a and connected with the second leg 7 to panel 1v by means of a screw through screw hole 9d. In connection G, the longitudinal edges 2 of the panels 1u and 1w meet and the hook 5 is connected with the first leg 6 to panel 1u by means of a screw through screw hole 8d and the second leg 7 is connected to panel 1w by means of a screw through screw hole 9d.

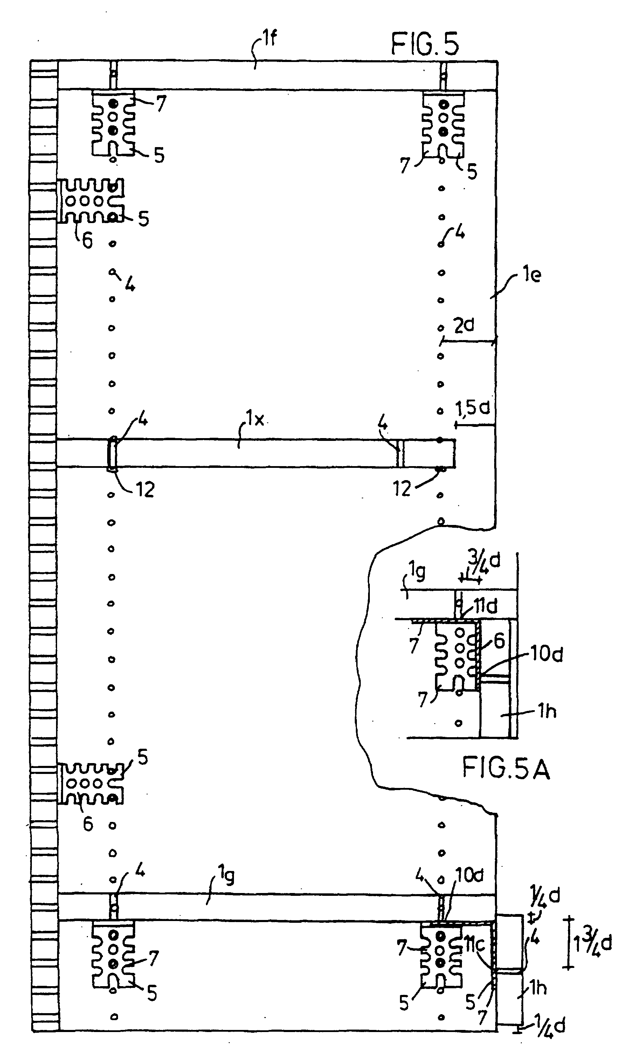

In the cupboard construction represented in figures 5, 5A, 6 and 6A, a number of details of the furniture system according to the invention are shown.

In figure 5, a number of horizontal panels can be seen, bearing reference numerals 1f, 1g and 1x. The panel 1x is a shelf but is designed in a manner similar to that of panels 1f and 1g and other panels according to the system. The width of panel 1x therefore meets the relation B = 2½d + n₁ . 1½d, as do panels 1f and 1g. For panel 1x, however, the number n is chosen 1 smaller than for the panels 1f and 1g. Consequently, the longitudinal edge 2 of panel 1x is situated at a distance of 1½d inside the longitudinal edge 2 of the side wall panel 1e. The row of holes 4 in side wall panel 1e, however, is situated at a distance of 2d from the longitudinal edge 2 of that panel. Consequently, screwed or inserted connecting supports 12 can still support the panel 1x near the longitudinal edge 2 thereof, so that the panel 1x can still be stably supported without additional means.

For a number of connections of the various component panels, the hooks 5 according to the invention used for this purpose have been shown, wherein it is also indicated which leg thereof is shown and through which holes screws have been led. It can be clearly seen that the hanging holes can also be used as screw holes, since the centre-to-centre distance of the hanging holes in a direction parallel to the lines R1 and R2 thereof, is equal to d.

At the lower side, the cupboard represented in figure 5 is provided with a skirting board 1h, which is also a panel of which the width meets the relation according to the invention. In this case n is 1, so that the width, or more accurately the height, is 4d. There are two possible arrangements of the skirting board 1h. One arrangement is shown in figure 5 and the other as cut-out in figure 5A. In figure 5, the skirting board 1 is fastened such, that a small slit of ¼d remains open towards the floor. The skirting board 1h is herein located in front of and possibly at least partly onto the longitudinal edges 2 of the side wall panels (i.a. 1e). The skirting board 1h is fastened to the lower horizontal panel 1g by means of another fastening hook 5, wherein the leg 7 of the hook 5 is fastened to the skirting board 1h by means of a screw through one or both hanging holes 11c and the leg 6 is fastened to the lower side of panel 1g by means of screws in one or both hanging holes 10d.

In figure 5A, an almost dustproof construction is shown, wherein the skirting board 1h is situated entirely between the lower surface of panel 1g and the floor. For, the array of holes in side wall panel 1e and the design of the hook 5 results in the panel 1g being supported with the lower surface at a distance which can be equal to the pattern measure B according to the invention. The skirting board 1h is now fastened to the leg 6 of the hook 5, that is by means of screws in one or both hanging holes 10b, while the second leg 7 of the hook is fastened to the lower side of panel 1g by means of screws in one or both hanging holes 11a.

By way of further illustration, a skirting board 1j with the smallest pattern measure wherein n = 0 is shown in figures 6 and 6A. The width or the height of the panel 1j is therefore 2½d. The hole 4 is therefore situated at ½d distance from the lower longitudinal edge and at a distance of 2d from the upper longitudinal edge of the skirting board 1j. The skirting board 1j is fastened to lower panel 1g in a manner which is similar to that of skirting board 1h in figures 5A and 5, respectively.

Figure 7 shows a top view of a construction of a cupboard possible with the invention. The double cupboard in figure 7 is assembled from rear wall panels 1k, side wall panels 1l and front wall panels or doors 1m. All panels have a width satisfying the relation B = 2½d + n₁ . 1½d in which n₁ ∈ N₀. This equation according to the invention allows for the doors to be placed in the manner as indicated, in other words with their longitudinal edge near the hinge, at ½d from the outer surface of the side wall panel 1l in question and at the opening with their longitudinal edges nearly touching, wherein at the location of the centre side wall panel, the neighbouring doors of the adjoining cupboards can thus also at least almost touch with their longitudinal edges. When it is assumed that the width of panel 1k is 2½d + N₁ . 1½d and N₁ is an odd number, then, when N₂ = ½ (N1-1) is applied for the doors, the total width of the doors would be 1d more than the width of the panel 1k.

## Claims

1. Modular furniture system comprising a number of panels (1) and a number of connecting elements (5) for connecting the panels to form a piece of furniture on their own, wherein the panels are provided with holes (4) for connection with the connecting elements (5), wherein the panels (1) have a thickness d and wherein the panels (1) each have a width (B) and length (L), the panels (1) being provided with at least one series of holes (4) extending in the longitudinal direction, the centre-to-centre distance of which being equal to the panel's thickness, namely d, **characterized in that** said series of holes is situated at a distance of 2d from the neighbouring longitudinal side (2) of the panel in question and wherein the width of the panels complies with the relation 2½d + n₁ . 1½d, in which n₁ ∈ N₀, n₁ being an integer including the value zero.

2. Modular furniture system according to claim 1, wherein the series of holes (4) in the panels (1) end at ½d from the short or width side (3) of the panel (1) in question and wherein the connecting elements (5) comprise parts for supporting the lower side of a horizontally arranged panel (1) on panels arranged upright at a height of n₂ . d from the lower short side, wherein n₂ ∈ N, n₂ being an integer not including the value zero.

3. Modular furniture system according to claim 1 or 2, assembled to be a cupboard, comprising a rear panel (1k), at least two side wall panels (1l) and a front wall made up of two panels (1m), which two front wall panels are placed against the front end edges of the side wall panels and wherein the rear panel is placed between faces defined by the inner surfaces of the side wall panels, the front wall panels with their outer end edges facing away from each other being situated in a plane, which plane divides the side wall panel in question in half and is perpendicular to the front end edge of the side wall panel in question.

4. Furniture system according to any one of the claims 1-3, wherein the connecting elements (5) are formed as angular hooks, with a flat first leg (6) and a flat second leg (7) perpendicular thereto, wherein both legs are provided with screw holes (8,9) arranged in accordance with a series situated in the middle of the leg in question, which series is perpendicular to the meeting line of both legs, and wherein both legs are further provided with hanging holes (10,11), which are arranged in accordance with series situated on the edges of the legs in question, which series extend parallel to the series of screw holes, wherein the hanging holes (10,11) are accessible from the side for receiving a screw already placed on a panel, and wherein the hanging holes (10) in the first leg (6) are situated at a distance of n₃ . ½d from the outer edge of the corner and the hanging holes (11) in the second leg (7) are situated at a distance of ³/₄d + n₄ . ½d from the outer edge of the corner, wherein n₃ and n₄ ∈ N₀, n₃ and n₄ being integers including the value zero.

5. Furniture system according to claim 4, wherein the screw holes (8,9) in both legs (6,7) are situated on n₅ . ½d from the outer edge of the corner, wherein n₅ ∈ N, n₅ being an integer not including the value zero.

6. Furniture system according to claim 5, wherein n₃ = 1, 2, 3, 4 and n₅ = 1, 2, 3, 4.

7. Furniture system according to claim 5 or 6, wherein n₄ = 1, 2, 3 and n₅ = 1, 2, 3, 4.

8. Furniture panel (1) provided with holes and having a thickness d, a width (B) and length (L), the panel (1) being provided with at least one series of holes (4) extending in the longitudinal direction of the panel (1), the centre-to-centre distance of which being equal to the panel's thickness, namely d, **characterised in that**, the at least one series of holes (4) is situated at a distance of 2d from the neighbouring longitudinal side (2) of the panel (1) and wherein the width of the panel (1) complies with the relation 2½d + n₁ . 1½d,
in which n₁ ∈ N₀, n₁ being an integer including the value zero.

## Patentansprüche

1. Modulares Möbelsystem umfassend eine Anzahl Platten (1) und eine Anzahl Verbindungselemente (5) zum Verbinden der Platten um selbst ein Möbelstück zu bilden, wobei die Platten mit Löchern (4) zur Verbindung mit den Verbindungselementen (5) versehen sind, wobei die Platten (1) eine Dicke d haben und wobei die Platten (1) jede eine Breite (B) und eine Länge (L) haben, wobei die Platten (1) mit zumindest einer Reihe sich in Längsrichtung ersteckende Löcher (4) versehen sind, deren Mitte-zu-Mitte Abstand gleich an der Dicke der Platte, nämlich d, ist, **dadurch gekennzeichnet, daß** die Reihe Löcher auf einem Abstand von 2d von der benachbarten Längsseite (2) der betreffenden Platte gelegen ist und wobei die Breite der Platten der Relation 2½d + n₁ . 1½d, wobei n₁ ∈ N₀, wobei n₁ eine ganze Zahl einschließlich dem Wert Null ist, entspricht.

2. Modulares Möbelsystem nach Anspruch 1, wobei die Reihen Löcher (4) in den Platten (1) auf ½d von der kurzen- oder Breiteseite (3) der betreffenden Platte (1) enden und wobei die Verbindungselemente (5) Teile umfassen zum Stützen der Unterseite einer horizontal aufgestellten Platte (1) auf aufrecht aufgestellten Platten auf einer Höhe von n₂. d ab der untersten kurzen Seite, wobei n₂ ∈ N, wobei n₂ eine ganze Zahl ausschließlich dem Wert Null ist.

3. Modulares Möbelsystem nach Anspruch 1 oder 2, zu einem Schrank zusammengesetzt, umfassend eine Hinterplatte (1k), zumindest zwei Seitenwandplatten (1l) und eine aus zwei Platten zusammengesetzte Vorderwand (1m), welche zwei Vorderwandplatten gegen die Vorderendränder der Seitenwandplatten angeordnet sind und wobei die Hinterplatte zwischen durch die Innenoberflächen der Seitenwandplatten bestimmten Flächen angeordnet ist, wobei die Vorderwandplatten mit ihren voneinander abgekehrten Außenendrändern in einer Fläche gelegen sind, welche Fläche die betreffende Seitenwandplatte mittendurch teilt und senkrecht auf dem Vorderendrand der betreffenden Seitenwandplatte steht.

4. Möbelsystem nach einem der Ansprüche 1-3, wobei die Verbindungselemente (5) als Winkelhaken gebildet sind, mit einem flachen ersten Bein (6) und einem senkrecht darauf stehenden flachen zweiten Bein (7), wobei die beiden Beinen mit nach einer in der Mitte des betreffenden Beines gelegenen Reihe angeordneten Schraubenlöchern (8, 9) versehen sind, welche Reihe senkrecht auf der Trefflinie der beiden Beine steht, und wobei die beiden Beine weiter mit Hängelöchern (10, 11) versehen sind, die gemäß an den Rändern der betreffenden Beine gelegenen Reihen angeordnet sind, welche Reihen parallel zu der Reihe Schraubenlöcher reichen, wobei die Hängelöcher (10, 11) von der Seite für Aufnahme einer schon auf einer Platte angeordneten Schraube zugänglich sind und wobei die Hängelöcher (10) in dem ersten Bein (6) auf einem Abstand von n₃ . ½d von dem Außenrand des Winkels gelegen sind und die Hängelöcher (11) in dem zweiten Bein (7) auf einem Abstand von ³/₄d + n₄. ½d von dem Außenrand des Winkels gelegen sind, wobei n₃ und n₄ ∈ N₀, wobei n₃ und n₄ ganze Zahlen einschließlich dem Wert Null sind.

5. Möbelsystem nach Anspruch 4, wobei die Schraubenlöcher (8, 9) in beiden Beinen (6, 7) auf n₅ . ½d ab dem Außenrand des Winkels gelegen sind, wobei n₅ ∈ N, wobei n₅ eine ganze Zahl ausschließlich dem Wert Null ist.

6. Möbelsystem nach Anspruch 5, wobei n₃ = 1, 2, 3, 4 und n₅ = 1, 2, 3, 4.

7. Möbelsystem nach Anspruch 5 oder 6, wobei n₄ = 1, 2, 3 und n₅ = 1, 2, 3, 4.

8. Möbelplatte (1) mit Löcher versehen und mit eine Dicke d, eine Breite (B) und eine Länge (L), wobei die Platte (1) mit zumindest einer Reihe sich in Längsrichtung der Platte (1) ersteckende Löcher (4), deren Mitte-zu-Mitte Abstand gleich an der Dicke der Platte, nämlich d, ist, versehen ist **dadurch gekennzeichnet, dass** zumindest einer Reihe Löcher (4) auf einem Abstand von 2d von der benachbarten Längsseite (2) der Platte (1) gelegen ist und wobei die Breite der Platte (1) der Relation 2½d + n₁ . 1½d, wobei n₁ ∈ N₀, wobei n₁ eine ganze Zahl einschliesslich dem Wert Null ist, entspricht.

## Revendications

1. Système de meuble modulaire comprenant une pluralité de panneaux (1) et une pluralité d'éléments de connexion (5) pour connecter les panneaux de manière à former à eux seuls un meuble, selon lequel les panneaux comportent des orifices (4) pour la connexion avec les éléments de connexion (5), selon lequel les panneaux (1) ont une épaisseur (d) et selon lequel les panneaux (1) ont chacun une largeur (B) et une longueur (L), les panneaux (1) étant pourvus d'au moins une série d'orifices (4) s'étendant dans la direction longitudinale, leur distance centre à centre étant égale à l'épaisseur du panneau, c'est à dire (d), **caractérisé en ce que** ladite série d'orifices est située à une distance de 2d à partir du côté longitudinal voisin (2) du panneau en question et selon lequel la largeur des panneaux satisfait la relation 2 ½ d + n₁ . 1 ½ d, dans laquelle n₁ ∈ N₀, n₁ étant un entier incluant la valeur zéro.

2. Système modulaire de meuble selon la revendication 1, selon lequel la série d'orifices (4) dans les panneaux (1) se termine à ½ d à partir du côté court ou largeur (3) du panneau (1) en question et où les éléments de connexion (5) comprennent des pièces pour supporter le côté inférieur d'un panneau (1) disposé horizontalement sur des panneaux disposés verticalement à une hauteur de n₂ . d à partir du côté court inférieur, selon lequel n₂ ∈ N, n₂ étant un entier ne comprenant pas la valeur zéro.

3. Système modulaire de meuble selon la revendication 1 ou 2, assemblé pour former une armoire, comprenant un panneau arrière (14), au moins deux panneaux latéraux (1l) et une paroi avant faite de deux panneaux (1m), lesquels deux panneaux avant sont placés contre les bords d'extrémité frontaux des panneaux latéraux et selon lequel le panneau arrière est placé entre des faces définies par les surfaces intérieures des panneaux latéraux, les panneaux avant avec leurs bords d'extrémité extérieurs éloignés l'un de l'autre étant situés dans un plan, lequel plan divise le panneau latéral en question par moitié et est perpendiculaire au bord d'extrémité avant du panneau latéral en question.

4. Système de meuble selon l'une quelconque des revendications 1 à 3, selon lequel les éléments de connexion (5) sont formés en crochets anglés, avec une première branche plate (6) et une deuxième branche plate (7) perpendiculaire à elle, selon lequel les deux branches sont pourvues de trous de vis (8, 9) disposés selon une série située au milieu de la branche en question, laquelle série est perpendiculaire à la ligne de rencontre des deux branches, et selon lequel les deux branches sont pourvues de plus de trous de suspension (10, 11), qui sont disposés selon des séries situées sur les bords des branches en question, lesquelles séries s'étendent parallèlement aux séries de trous de vis, selon lequel les trous de suspension (10, 11) sont accessibles depuis le côté pour recevoir une vis déjà placée sur un panneau, et où les trous de suspension (10) dans la première branche (6) sont situés à une distance de n₃ . ½ d à partir du bord extérieur du coin et des trous de suspension (11) dans la deuxième branche (7) sont situés à une distance de ³/₄ d + n₄ . ½ d à partir du bord extérieur du coin, selon lequel n₃ et n₄ ∈ N₀, n₃ et n₄ étant des entiers comprenant la valeur zéro.

5. Système de meuble selon la revendication 4, selon lequel les trous de vis (8, 9) dans les deux branches (6, 7) sont situés à n₅. d du bord extérieur du coin, selon lequel n₅ ∈ N, n₅ étant un entier ne comprenant pas la valeur zéro.

6. Système de meuble selon la revendication 5, selon lequel n₃ = 1, 2, 3, 4 et n₅ = 1,2,3,4.

7. Système de meuble selon la revendication 5 ou 6, selon lequel n₄ = 1, 2, 3 et n₅ = 1,2,3,4.

8. Panneau de meuble (1), pourvu d'orifices et ayant une épaisseur d, une largeur (B) et une longueur (L), le panneau (1) étant pourvu d'au moins une série de trous (4) s'étendant dans la direction longitudinale du panneau (L), dont la distance centre à centre est égale à l'épaisseur du panneau, c'est à dire d, **caractérisé en ce que**, la au moins une série de trous (4) est située à une distance de 2d à partir du côté longitudinal voisin (2) du panneau (1) et selon lequel la largeur du panneau (1) satisfait la relation 2 ½ d + n₁ . 1 ½ d, dans laquelle n₁ ∈ N₀, n₁ étant un entier comprenant la valeur zéro.
